**Europäisches Patentamt**

**European Patent Office**

**Office européen des brevets**

(19)

(11) Veröffentlichungsnummer : **0 348 719 B1**

(12) **EUROPÄISCHE PATENTSCHRIFT**

(45) Veröffentlichungstag der Patentschrift :
02.09.92 Patentblatt 92/36

(51) Int. Cl.$^5$ : **B23B 5/12**

(21) Anmeldenummer : **89110539.7**

(22) Anmeldetag : **10.06.89**

(54) **Schälmaschine.**

(30) Priorität : **25.06.88 DE 3821555**

(43) Veröffentlichungstag der Anmeldung :
**03.01.90 Patentblatt 90/01**

(45) Bekanntmachung des Hinweises auf die
Patenterteilung :
**02.09.92 Patentblatt 92/36**

(84) Benannte Vertragsstaaten :
**DE ES FR GB IT**

(56) Entgegenhaltungen :
**EP-A- 0 078 344**
**GB-A- 1 364 292**
**US-A- 3 899 943**

(73) Patentinhaber : **Th. Kieserling & Albrecht
GmbH & Co.
Postfach 10 07 45
W-5650 Solingen (DE)**

(72) Erfinder : **Japs, Dieter, Dr. Dipl.-Ing.
Burger Landstrasse 17
W-5650 Solingen (DE)**

## Beschreibung

Die Erfindung betrifft eine Schälmaschine nach dem Oberbegriff von Anspruch 1 und ein Verfahren zum Anschälen von Rundmaterial. Schälmaschinen dieser Art dienen hauptsächlich dazu, aus warmgewalztem Rundmaterial sogenannten Blankstahl herzustellen. Dabei wird das stangenförmige Rundmaterial an seinem zylindrischen Umfang durch einen rotierenden Messerkopf geschält. Die Stange selbst wird gegen ungewollte Rotation gesichert axial durch eine Zentralbohrung im Messerkopf durch die Schälmaschine geführt. Der rotierende Messerkopf trägt 3 oder mehr nach innen gerichtete Messer, die die Stange auf wendelförmiger Bahn schälen. Derartige Schälmaschinen werden bei Draht, Stangen und Rohren eingesetzt. Die derzeit gebräuchlichen Schälmaschinen arbeiten mit einem Einschubapparat einlaufseitig vor dem Messerkopf, der aus zwei Rollenpaaren besteht und mit einem Spannwagen auslaufseitig des Messerkopfes, der den Stab gegen Verdrehen sichert und transportiert, wenn das letzte Ende des Stabes geschält wird.

Moderne Schälmaschinen können den Vorschub, die Messerkopfdrehzahl und den Fertigdurchmesser während des Betriebs verändern.

Eine Schälmaschine der eingangs geschilderten Art ist aus der DE-OS 1 552 359 bekannt.

Sie hat einen umlaufenden Messerkopf mit nach innen gerichteten Messern, ein angetriebenes Einschubaggregat für das Rundmaterial, wobei das Einschubaggregat einlaufseitig des Messerkopfes angeordnet ist, eine Auszugseinrichtung auslaufseitig des Messerkopfes und eine Meßeinrichtung zur Erfassung des geschälten Durchmessers. Die Meßeinrichtung ist auslaufseitig des Messerkopfes angeordnet und dient der laufenden Erfassung des geschälten Fertigdurchmessers.

Nachteilig bei dieser Schälmaschine ist, daß der Anschälvorgang nicht automatisierbar ist, weil die geschälte Stange erst gemessen wird, wenn ihr einlaufseitiges Ende die Schälmaschine bzw. den Messerkopf und eine dieser nachgeordnete auslaufseitige Führung für das Schälgut verlassen hat.

Aus der US-PS 3899943 ist ebenfalls eine Schälmaschine für Rundmaterial bekannt, die mit einem umlaufenden Messerkopf auf wendelförmiger Bahn eine Stange abschält. Diese Schälmaschine hat schräg angestellte Einzugs- und Auszugsrollenpaare, die die Stange durch die Schälmaschine transportieren. Auslaufseitig des Auszugsrollenpaares ist eine Durchmesser - Meßeinrichtung vorgesehen, wie bei der vorgenannten DE-OS 1552359. Der geschälte Durchmesser wird also erst automatisch gemessen, wenn der Schälprozess schon weit fortgeschritten ist. Der Betrieb der Maschine nach der US-PS 3899943 wird so beschrieben, daß im Rahmen einer Voreinstellung die Schälmaschine so justiert wird, daß die erwartete Stange geschält werden kann. Diese Voreinstellung ist erforderlich, damit u.a. die Einzugsrollen den richtigen Abstand voneinander haben und damit die Schälmesser so eingestellt werden können, daß sich der gewünschte Fertigdurchmesser voraussichtlich ergibt. Das Anschälen ist dort nicht erwähnt. Das Anschälen dient der Überprüfung dieser Voreinstellung speziell der Schälmesser.

Aus beiden Entgegenhaltungen sind keine Gesichtspunkte zu entnehmen, wie der dort nicht erwähnte Vorgang des Anschälens aus der Sphäre des von Unwägbarkeiten getragenen Meßvorgangs durch den Bedienungsmann herausgenommen werden kann.

Der Erfindung liegt die Aufgabe zugrunde, eine Schälmaschine für einen automatischen Anschälvorgang auszubilden und auszurüsten.

Die Lösung dieser Aufgabe ist im Anspruch 1 wiedergegeben. Viele Schälmaschinen haben zwischen dem Einschubapparat und dem Messerkopf eine sogenannte "vordere Führung", das ist eine Art Rollenkaliber, das insbesondere bei dünnen Werkstücken eine Zentrierung des Schälgutes unmittelbar vor dem Messerkopf und eine Bedämpfung der aus dem Schnittvorgang herrührenden Schwingungen bewirkt. Erfindungsgemäß wird die Meßeinrichtung zwischen dem einlaufseitig der Schälmaschine vorgeschalteten angetriebenen Rollgang und dem Messerkopf, bevorzugt aber einlaufseitig der vorderen Führung angeordnet. Dabei wird erreicht, daß die Wirkung der vorderen Führung und des Einschubapparates nicht beeinträchtigt wird und daß nur ein für die Messung ausreichend langer Längsabschnitt des Schälgutes angeschält werden muß.

In Weiterbildung der Erfindung ist nach Anspruch 2 vorgesehen, eine zusätzliche Meßeinrichtung auslaufseitig anzuordnen, um jegliche Handmessung durch den Bedienungsmann überflüssig zu machen.

Bevorzugt sind Meßeinrichtungen der in Anspruch 3 genannten Art vorgesehen, da sie in Ermangelung von Meßfühlern keinen mechanischen Verschleiß haben. Derartige Meßeinrichtungen haben zudem den Vorzug, daß eine Voreinstellung auf einen auszuwählenden Durchmesser entbehrlich wird. Fehlbedienung bei der Voreinstellungen der Durchmessermeßeinrichtung können keinen Schaden am Gerät verursachen.

Die beim Schälen in geringem Umfang möglichen Ablagerungen von Kühlmittel und Spänen auf der fertig geschälten Stange werden durch Preßluft oder mit Abstreifern einlaufseitig der Meßeinrichtung entfernt. "Einlaufseitig" ist dabei auf die Rückwärtsbewegung der Stange bezogen.

Neben der Vermeidung von Meßfehlern durch das Bedienungspersonal soll mit der Erfindung der Anschälvorgang automatisiert werden. Da moderne Schälmaschinen ohnehin programmgesteuert betrieben werden,

2

soll in weiterer Ausgestaltung der Erfindung auch das Anschälen nach einem Programm erfolgen, das vom Steuerpult aus aufgerufen werden kann.

Die verfahrensmäßige Ausgestaltung der Erfindung kommt in Anspruch 7 zum Ausdruck. Das Anschälen war bisher stets ein Arbeitsvorgang, der vom Bedienungsmann viel Aufmerksamkeit verlangte und die präzisierte Einstellung der Schälmaschine auf sein Meßergebnis stützte. Eine automatisierte Meßwerterfassung beim Anschälen bietet die einfache Möglichkeit, die erfaßten Meßwerte ohne Ablesefehler nach festlegbaren Kriterien in Einstellungskorrekturen am Messerkopf umzusetzen.

Aus Gründen der Sicherheit ist vorgesehen, das angeschälte Ende vor der Messung zu reinigen.

Die Erfindung wird im einzelnen anhand der Zeichnung näher erläutert, dabei zeigen :

Fig. 1 : eine schematische Darstellung einer Schälmaschine

Fig. 2 bis 4 : Die Arbeitsfolge bis zum Fertigschälen

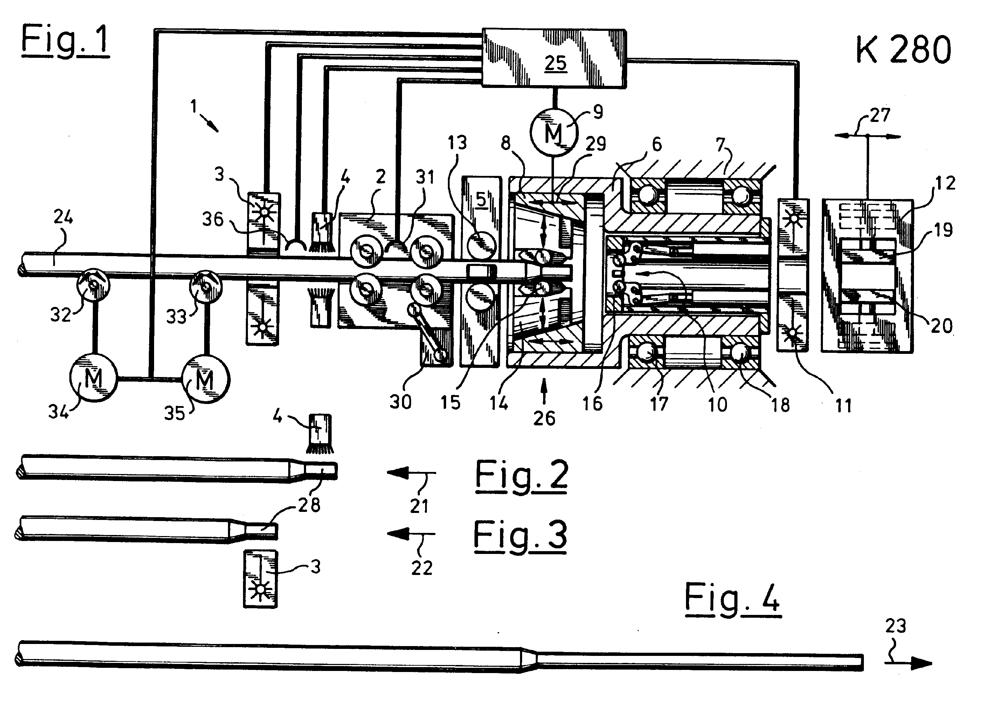

Fig.1 zeigt eine Stange 24, die in einer Schälmaschine 1 geschält wird. Die Schälmaschine besteht aus einem Einschubaggregat 2, einer Lasermeßeinrichtung 3 mit einem in Richtung des Pfeiles 23 auslaufseitig der Lasermeßeinrichtung vorgesehenen Indikator 36, einer Preßluft-Reinigungseinrichtung 4, einer vorderen Führung 5, einem Messerkopf 26 an einer Hohlwelle 6, die in einem Maschinengestell 7 auf bekannte Weise in Lagern 17, 18 drehangetrieben aufgenommen ist, einer hinteren Führung 10, die mit ihren Rollen 16 die Stange am geschälten Abschnitt einspannt, einer hinteren Lasermeßeinrichtung 11 und einem Spannwagen 12, der gemäß Pfeil 27 verfahrbar ist und mit seinen Spannbacken 19, 20 die Stange 24 gegen Verdrehen sichert und aus der Schälmaschine herauszieht. Der Arbeitsablauf der Schälmaschine 1 wird von einer Steuereinrichtung 25 bestimmt, an die u.a. das Einschubaggregat 2, die einlaufseitige Lasermeßeinrichtung 3, die Reinigungseinrichtung 4, der Stellmotor für die Messer 15 und die auslaufseitige Lasermeßeinrichtung 11 angeschlossen sind.

Der Messerkopf 26 befindet sich in einem erweiterten Absatz an der einlaufseitigen Stirnseite der Hohlwelle 6, in der eine Konushülse 8 in Durchlaufrichtung der Stange 24, wie mit dem Pfeil 29 angezeigt, von einem Stellmotor 9 bei umlaufender Hohlwelle 6 verschoben werden kann, mehreren Messerhaltern 14, die sich innen an dem Konus der Konushülse 8 radial abstützen und die bei axialer Verschiebung der Konushülse 8 in radialer Richtung zur Stange 24 verstellt werden. Die Messer 15 an den Messerhaltern 14 schälen entsprechend der Position der Messerhalter und der Konushülse eine Schicht einstellbarer Dicke von der Stange 24 ab. Die Schwingungen des Zerspanungsprozesses am Messerkopf werden von den Rollen 13 und 16 der vorderen und hinteren Führung 5 bzw. 10 gedämpft.

Einlaufseitig der Schälmaschine 1 befindet sich ein offener Rollgang mit von Motoren 34, 35 angetriebenen Zuführrollen 32, 33, die die Stange 24 in den Bereich des Einschubaggregates 2 transportieren. Die Motoren arbeiten mit umkehrbarer Arbeitsrichtung.

Das Einschubaggregat 2 sichert die Stange 24 gegen Verdrehen unter dem Schnittmoment, das im Messerkopf 26 in die Stange eingeleitet wird. Zusätzlich bringt es die Vorschubkraft auf, um die Stange durch den Messerkopf 26 zu schieben. Am Einschubapparat ist eine Wegmeßeinrichtung 30 vorgesehen, die mit einer Impulszählung die gewünschten Weglängen beim Anschälen des Zapfens 28, sicherstellt.

Ausgelöst wird die Wegmessung durch einen Initiator 31 auslaufseitig des ersten Rollenpaares des Einschubaggregates 2.

Um die richtige Einstellung der Messer 15 zur Erzielung des gewünschten Fertigdurchmessers der Stange 24 zu ermitteln, wird normalerweise nur ein Zapfen 28 an der ersten Stange eines Loses von Stangen angeschält. Dieses Verfahren ist notwendig, da Vorausberechnungen der Auffederung der Maschine unter den jeweiligen Zerspanungsbedingungen bei dem jeweiligen Material und dem jeweiligen Zustand der Schneiden nicht zuverlässig von vornherein zu einem Schälmaß in dem gewünschten Toleranzfeld führen.

Der Zapfen wird beim Anschälen so kurz wie möglich gewählt, um möglichst wenig Zeit für das Anschälen zu verlieren. Die Zapfenlänge kann z.B. 10 cm betragen. Sobald die gewünschte Zapfenlänge geschält ist, wird automatisch der Vorschub der Stange 24 unterbrochen. Nach diesem sogenannten Anschälen wird von der Steuereinrichtung 25 der Vorschub der Schälmachine gem. Pfeil 21 umgekehrt und die Stange zurückgefahren, bis der Zapfen 28 in den Bereich der Reinigungseinrichtung 4 kommt (Fig.2). Beim Passieren der Reinigungseinrichtung 4 werden Verunreinigungen, wie Kühlwasser oder Späne automatisch abgeblasen und die Stange 24 fährt weiter zurück bis der Zapfen 28 in den Bereich der einlaufseitigen Lasermeßeinrichtung 3 kommt und dort durch ein Signal eines Initiators 36 angehalten und automatisch vermessen wird. Der gemessene Durchmesserwert wird in der Steuereinrichtung erfaßt. Das Maß, um das die Stange 24 für die Vermessung des Zapfens zurückgefahren wird, ist konstant und wird durch einen Indikator 36 im Bereich der Zuführrollen 32, 33 sichergestellt.

Aus dieser Position und nach der Messung wird die Vorschubrichtung der Stange 24 automatisch noch einmal in die Richtung des Pfeiles 23 umgekehrt. Während der Umkehr werden die Messer 15 durch einen Soll- Istwertvergleich um das Differenzmaß verstellt und die Stange 24 wird, wie in Fig. 4 gezeigt, fertig geschält.

Während des Schälens wird die Einstellung der Messer 15 kontinuierlich unter Berücksichtigung der von der auslaufseitigen Lasermeßeinrichtung 11 ermittelten Durchmesserwerte korrigiert. Der auslaufseitigen Meßeinrichtung 11 ist eine weitere, nicht gezeigte Reinigungseinrichtung vorgeordnet, die sicherstellt, daß der geschälte Durchmesser exakt gemessen werden kann.

Der Spannwagen 12 übernimmt die Aufgabe des Vorschubes und der Sicherung der Stange gegen Verdrehen erst gegen Ende der Schälbearbeitung einer jeden Stange, wenn das Einschubaggregat das passierende hintere Ende der Stange 24 nicht mehr erfassen kann.

Das ganze Verfahren beim Anschälen der Stange 24 läuft aufgrund der automatischen Reinigung und Meßwerterfassung auf der Einlaufseite der Schälmaschine, durch die Steuerungseinrichtung 25 ohne Eingreifen des Bedienungspersonals ab.

**Patentansprüche**

1.) Schälmaschine für Rundmaterial, die die folgenden Merkmale aufweist:
a) einen umlaufenden Messerkopf (26) mit nach innen gerichteten Messern (15) stirnseitig an einer Hohlwelle (6),
b) mindestens ein angetriebenes Einschubaggregat (2) für das Rundmaterial (24)
c) das Einschubaggregat (2) ist einlaufseitig des Messerkopfes (26) angeordnet,
d) eine Auszugseinrichtung (12) auslaufseitig des Messerkopfes,
e) eine Meßeinrichtung zur Erfassung des Durchmessers des Rundmaterials,
f) eine Stelleinrichtung (9) zur radialen Verstellung der Schälmesser (15),
gekennzeichnet durch die folgenden Merkmale:
m) die Meßeinrichtung (3) ist zwischen dem einlausfseitig ersten Zuführmittel (32) und dem Messerkopf (26) angeordnet.
2.) Schälmaschine nach Anspruch 1, gekennzeichnet durch das folgende Merkmal:
g) eine zusätzliche Meßeinrichtung (11) auslaufseitig des Messerkopfes (26)
3.) Schälmaschine nach Anspruch 1, gekennzeichnet durch das folgende Merkmal:
h) die Meßeinrichtung (3) arbeitet berührungslos,
4.) Schälmaschine nach einem der Ansprüche 1 oder 2, gekennzeichnet durch das folgende Merkmal:
i) Mittel (4) zur Reinigung des geschälten Rundmaterials, vor der einlaufseitigen Meßeinrichtung (3),
5.) Schälmaschine nach Anspruch 1, gekennzeichnet durch das folgende Merkmal:
j) ein in seiner Arbeitsrichtung umkehrbarer Antrieb der Zuführmittel (2, 32, 33),
6.) Schälmaschine nach Anspruch 1 oder 5, gekennzeichnet durch das folgende Merkmal:
k) eine automatische Steuerung für das Einschubaggregat (2) beim Anschälen,
7.) Verfahren zum Anschälen von Rundmaterial auf einer Schälmaschine mit umlaufendem Messerkopf und einem Einschubapparat einlaufseitig des Messerkopfes, wobei zum Anschälen der Messerkopf auf ein vorläufiges Maß eingestellt wird, das einlaufseitige Ende des Rundmaterials in den Messerkopf vorgeschoben wird, das Rundmaterial zurückgezogen wird, das angeschälte Ende des Rundmaterials automatisch von einer Meßeinrichtung vor dem Messerkopf im Durchmesser gemessen wird, die Messerkopfeinstellung präzisiert wird und das Rundmaterial fertig geschält wird.
8.) Verfahren nach Anspruch 7, **dadurch gekennzeichnet,** daß das Rundmaterial vor der Messung gereinigt wird.
9.) Schälmaschine nach Anspruch 1, gekennzeichnet durch das folgende Merkmal:
l) Mittel (Indikator 36) zur Steuerung des Vorschubs der Stange (24) und eine Reinigungungseinrichtung sind unmittelbar neben der einlaufseitigen Meßeinrichtung (3) angeordnet.

**Claims**

1.) peeling machine for round-section material, with the following characteristics:
a) a revolving cutter head (26) with cutters facing inwards (15) on the front face of a hollow shaft (6),
b) at least one motorised infeed device (2) for roundsection material (24)
c) the infeed device (2) is situated on the entry side of the cutter head (26),
d) an extraction device (12) on the exit side of the cutter head,
e) a measuring device for detecting the diameter of the round-section material,
f) an adjustment device (9) for adjusting the cutters (15) in a radial direction,

having the following features:

m) the measuring device (3) is positioned between the first feed device (32) on the entry side and the cutter head (26).

2.) peeling machine according to Claim 1 characterised by the following feature:

g) an additional measuring device (11) on the exit side of the cutter head (26),

3.) peeling machine according to Claim 1, characterised by the following feature:

h) the measuring device (3) does not make contact with the bar being measured

4.) peeling machine according to one of the Claims 1 or 2, characterised by the following feature:

i) a means (4) of cleaning the peeled round-section material before the measuring device on the entry side (3),

5. ) peeling machine according to Claim 1, characterised by the following feature:

j) the infeed device is equipped with a reversible direction drive (2, 32, 33),

6.) peeling machine according to Claim 1 or 5, characterised by the following feature:

k) an automatic controller for the infeed device (2) during test-peeling,

7.) A process for test-peeling round-section material on a peeling machine with a rotating cutter head and an infeed device on the entry side of the cutter head, where the cutter head is set to a provisional diameter setting for test-peeling, the leading end of the round-section material is fed into the cutter head, the round-section material is retracted, the diameter of the peeled leading end of the round-section material is automatically measured by a measuring device in front of the cutter head, the exact position of the cutter head is adjusted and the round-section material is finish peeled.

8.) A process according to Claim 7, characterised by the fact that the round-section material is cleaned before it is measured.

9.) peeling machine according to Claim 1, characterised by the following feature:

l) the means (sensor 36) for controlling the feed of the bar (24) and the cleaning system are positioned immediately beside the measuring device on the entry side (3).


**Revendications**

1.  Machine à écrouter pour produits ronds, présentant les caractéristiques suivantes:

    a) une tête porte-couteaux rotative (26) comportant des couteaux (15) tournes vers l'intérieur, montée frontalement sur un arbre creux (6),

    b) au moins un organe d'introduction (2), motorisé, pour le produit rond (24),

    c) l'organe d'introduction (2) est dispose du côté entrée par rapport à la tête porte-couteaux (26),

    d) un dispositif d'extraction (12), du côté sortie par rapport à la tête porte-couteaux,

    e) un dispositif de mesure pour saisir le diamètre du produit rond,

    f) un dispositif de positionnement (9) pour déplacer radialement les couteaux d'écroutage (15),

    caractérisée par les caractéristiques suivantes:

    m) le dispositif de mesure (3) est disposé entre le premier moyen d'alimentation (32) et la tête porte-couteaux (26).

2.  Machine à écrouter suivant la revendication 1, caractérisée par la caractéristique suivante:

    g) un dispositif supplémentaire de mesure (11) du côte sortie de la tête porte-couteaux (26).

3.  Machine à écrouter suivant la revendication 1, caractérisée par la caractéristique suivante:

    h) le dispositif de mesure (3) travaille sans contact.

4.  Machine à écrouter suivant la revendication 1 ou la revendication 2, caractérisée par la caractéristique suivante:

    i) des moyens (4) pour le nettoyage du produit rond écrouté, placés avant le dispositif de mesure (3), côté entrée.

5.  Machine à écrouter suivant la revendication 1, caractérisée par la caractéristique suivante:

    j) un entraînement des moyens d'alimentation (2, 32, 33), dont le sens de fonctionnement peut être inverse.

6.  Machine à écrouter suivant la revendication 1 ou la revendication 5, caractérisée par la caractéristique suivante:

k) une commande automatique pour l'organe d'introduction (2) en écroutage.

7. Procédé pour écrouter des produits ronds sur une machine à écrouter comportant une tête de coupe rotative et un appareil d'introduction sur le côté entrée de la tête de coupe, étant entendu que, pour l'écroutage, la tête porte-couteaux est réglée sur une dimension provisoire, que l'extrémité côté entrée du produit rond est introduite dans la tête porte-couteaux, que le produit rond est tiré en arrière, que l'extrémité en écroutage du produit rond est automatiquement mesurée en diamètre par un dispositif de mesure avant la tête porte-couteaux, que le réglage de la tête porte-couteaux est ajusté et que l'on termine l'écroutage du produit rond.

8. Procédé suivant la revendication 7, caractérisé en ce que le produit rond est nettoyé avant la mesure.

9. Machine à écrouter suivant la revendication 1, caractérisée par la caractéristique suivante:
l) des moyens (indicateur 36) pour la commande de l'avancemermt de la barre (24) et un dispositif de nettoyage sont disposés directement contre le dispositif de mesure (3) côté entrée.

K 280

Fig.1

Fig.2

Fig.3

Fig.4